# EUROPEAN PATENT APPLICATION

(11) **EP 4 693 724 A1**
(43) Date of publication of application: **11.02.2026**
(21) Application number: 25763731.4
(22) Date of filing: 02.01.2025
(51) Int. Cl.: H01M 50/691, H01M 50/317, H01M 10/6568, H01M 50/383, H01M 50/249

(54) **BATTERY PACK CASE, BATTERY PACK, AND VEHICLE COMPRISING SAME**

(30) Priority: 10.06.2024 KR 20240075263
(71) Applicant: LG Energy Solution, Ltd., Seoul 07335 (KR)
(72) Inventor: JUNG, Ki Taek, Daejeon 34122 (KR); PARK, Won Kyoung, Daejeon 34122 (KR); KIM, Young Gil, Daejeon 34122 (KR)
(74) Representative: BCKIP Part mbB
(86) International application number: PCT/KR2025/000008
(87) International publication number: WO 2025/258783

(57) **Abstract**

A battery pack case, a battery pack, and a vehicle including the same are disclosed. The battery pack case includes a base plate forming a surface of the battery pack case and having a through-hole formed to communicate an internal space of the battery pack case with an outside, an external plate spaced apart from an outer surface of the base plate and configured to block the through-hole from being exposed to the outside and to define a separation space between the base plate and the external plate, and a venting valve provided on the external plate to selectively discharge a fluid from the separation space.

## Description

### TECHNICAL FIELD

The present disclosure relates to a battery pack case, a battery pack, and a vehicle including the same, which facilitate the discharge of gases generated in the event of a fire within the battery pack case, while effectively discharging a cooling medium leaked from a cooling device installed inside the battery pack case to prevent short circuits of battery cells.

### BACKGROUND

Technologies aimed at carbon reduction are being actively developed to address environmental issues such as recent abnormal climate changes. In order to reduce carbon emissions, energy may be produced using environmentally friendly methods, rather than using fossil fuels. The produced energy needs to be stored in the form of electrical energy, which is utilized in vehicles, various industrial sites, and households.

Batteries capable of storing and retrieving electrical energy may be used for the effective utilization of electrical energy in carbon reduction efforts. Therefore, sufficient battery performance may be ensured for storing electrical energy adequately and using the electrical energy without inconvenience.

Batteries are operated based mainly on redox reactions of metal ions. In order to improve battery capacity, charge/discharge performance, and efficiency, metal ions are used at high densities. Moreover, extensive research is being conducted on the materials that compose electrolytes and on the solid electrolytes, and the like. However, there is a problem that stability tends to decrease as battery performance improves.

### SUMMARY

The present disclosure provides a battery pack case, a battery pack, and a vehicle including the same, which facilitate the discharge of gases generated in the event of a fire in a specific battery cell or in a battery module within the battery pack case, while effectively discharging a cooling medium leaked from a cooling device installed inside the battery pack case to prevent or suppress short circuits, thereby resulting in an enhanced battery safety.

The technical problems to be addressed by the present disclosure are not limited to the technical problems mentioned above, and other technical problems not mentioned will be clearly understood by those skilled in the art to which the present disclosure belongs from the descriptions below.

A battery pack case according to the present disclosure includes a base plate forming a surface of the battery pack case and having a through-hole formed to communicate an internal space of the battery pack case with an outside, an external plate spaced apart from an outer surface of the base plate and configured to block the through-hole from being exposed to the outside and to define a separation space between the base plate and the external plate, and a venting valve provided on the external plate to selectively discharge a fluid from the separation space.

In case of the battery pack case according to the present disclosure, the external plate may have a sidewall formed along a perimeter thereof and may be coupled at the sidewall to the base plate to define the separation space.

In case of the battery pack case according to the present disclosure, the external plate may be formed such that a portion thereof corresponding to the through-hole of the base plate protrudes outward from the battery pack case.

In case of the battery pack case according to the present disclosure, the venting valve of the external plate may be formed at a position corresponding to the through-hole of the base plate.

In case of the battery pack case according to the present disclosure, the external plate may be formed to be inclined outward from a portion thereof corresponding to the through-hole, so that a height of the separation space decreases outward from the portion corresponding to the through-hole.

In case of the battery pack case according to the present disclosure, the venting valve of the external plate may be provided at a position where a separation distance between the base plate and the external plate is maximum.

In case of the battery pack case according to the present disclosure, the external plate may be formed with a venting valve protector.

In case of the battery pack case according to the present disclosure, the venting valve protector of the external plate may be formed at a position where the venting valve is formed so as to be higher than a height of the venting valve along an outer circumference of the venting valve.

In case of the battery pack case according to the present disclosure, the venting valve protector of the external plate may be integrally formed with the external plate.

In case of the battery pack case according to the present disclosure, the venting valve of the external plate may be covered by a valve cover, and the valve cover may cover the venting valve outside the external plate.

In case of the battery pack case according to the present disclosure, the valve cover may be coupled to the external plate in either a width direction or a length direction of the external plate.

In case of the battery pack case according to the present disclosure, the base plate may form a bottom surface of the battery pack case, the battery pack case may incorporate a battery assembly inside, and the through-hole of the base plate may be formed at a point between a plurality of battery assemblies incorporated in the battery pack case.

In case of the battery pack case according to the present disclosure, a cooling channel may be provided between a battery assembly incorporated in the battery pack case and the base plate, and the through-hole of the base plate may be formed at a position corresponding to a cooling port of the cooling channel or a cooling hose connected to the cooling port, so that a cooling medium leaked from the cooling port or the cooling hose may be introduced into the through-hole by gravity.

In case of the battery pack case according to the present disclosure, the through-hole of the base plate may be equipped with a filter cover or a filter net, thus preventing or suppressing a foreign substance from entering the separation space.

In case of the battery pack case according to the present disclosure, the filter cover may be installed at a point of the through-hole that faces the internal space of the battery pack case, and the filter net may be formed at a point of the through-hole that faces the outside of the battery pack case.

In case of the battery pack case according to the present disclosure, a flange may be formed on an inner circumference of the through-hole to protrude inward of the through-hole, and the filter cover may be coupled to the flange.

In case of the battery pack case according to the present disclosure, a plurality of supports may be formed on the flange to protrude toward the filter cover, and the filter cover may be seated on the supports, thus causing the filter cover and the flange to be spaced apart from each other.

In case of the battery pack case according to the present disclosure, the filter cover may be secured to the supports, thus coupling the filter cover to the base plate.

In case of the battery pack case according to the present disclosure, the filter cover may have a plate shape and may be seated inside the through-hole, with an outer circumference of the filter cover being spaced apart from an inner circumference of the through-hole to create a gap therebetween, so that the internal space of the battery pack case may communicate with the separation space through the gap.

In case of the battery pack case according to the present disclosure, the external plate may be provided with a sealing portion along a perimeter, and may be coupled to the base plate with the sealing portion therebetween.

A battery pack according to the present disclosure includes the battery pack case described above.

A vehicle according to the present disclosure includes the battery pack case described above.

According to the battery pack case, battery pack, and vehicle including the same of the present disclosure, when a fire occurs in the battery pack equipped with a cooling device inside, it is possible to facilitate the discharge of gases generated by the fire while effectively discharging a cooling medium leaked from the cooling device, thereby preventing or suppressing damage such as short circuits caused by the leaked cooling medium within the battery pack.

The effects achievable by the present disclosure are not limited to the effects mentioned above, and other effects not mentioned will also be clearly understood by those skilled in the art to which the present disclosure belongs from the descriptions below.

### BRIEF DESCRIPTION OF THE DRAWINGS

FIG. 1 is a partial cross-sectional view illustrating a battery pack case according to one embodiment of the present disclosure.
FIG. 2 is a top view of the battery pack case illustrated in FIG. 1.
FIG. 3 is a view illustrating a through-hole of the battery pack case illustrated in FIG. 1.
FIG. 4 is a view illustrating a filter cover mounted on the battery pack case illustrated in FIG. 3.
FIG. 5 is a cross-sectional view of the battery pack case illustrated in FIG. 1 at the location of the through-hole.
FIG. 6 is a cross-sectional view of the battery pack case illustrated in FIG. 1 at the location of a venting valve.
FIG. 7 is a view illustrating the formation of a venting valve protector at the venting valve location of the battery pack case illustrated in FIG. 1.
FIG. 8 is an enlarged view of the venting valve protector of the battery pack case illustrated in FIG. 7.
FIG. 9 is a view illustrating the formation of a valve cover at the venting valve location of the battery pack case illustrated in FIG. 1.
FIG. 10 is a cross-sectional view illustrating the valve cover formed on the battery pack case illustrated in FIG. 9.
FIG. 11 is a view illustrating a battery pack and a vehicle to which the battery pack case illustrated in FIG. 1 is applied.

### DETAILED DESCRIPTION

In describing embodiments disclosed herein, when it is determined that specific descriptions of related known technologies may obscure the gist of the embodiments disclosed herein, detailed descriptions thereof will be omitted. Further, the accompanying drawings are provided solely to facilitate easy understanding of the embodiments disclosed herein and are not intended to limit technical ideas disclosed herein. All modifications, equivalents, and substitutes that are included in the spirit and technical scope of the present disclosure should be understood as being included herein.

Singular expressions include plural expressions thereof unless the context clearly indicates otherwise. Terms such as "comprises" or "has" as used herein are intended to specify the presence of features, numbers, steps, operations, components, elements, or combinations thereof described herein, and should not be understood as precluding the possibility of one or more other features, numbers, steps, operations, components, elements, or combinations thereof being present or added.

The suffixes "module" and "part" used for components in the following description are given or used interchangeably only for the ease of writing the specification, and do not inherently denote any distinct meaning or role. When a component is mentioned as being "connected to" or "linked to" another component, it should be understood that it may be directly connected or linked to the other component, but an intervening component may be present. On the other hand, when a component is mentioned as being "directly connected to" or "directly linked to" another component, it should be understood that no intervening component is present.

Hereinafter, the embodiments disclosed herein will be described in detail with reference to the accompanying drawings, and regardless of reference numerals, identical or similar components will be given the same reference numerals and redundant descriptions thereof will be omitted.

A battery used in vehicles, industries, and households is manufactured in a physical unit called a pack. A battery pack incorporates and seals multiple battery cells inside a battery case, thus functioning to prevent a fire from spreading externally in case of an accident such as thermal runaway in the battery and to protect the internal battery cells from deterioration due to the influence of external environmental factors, or physical damage.

Multiple battery cells of a battery pack are incorporated in an intermediate form such as a module or assembly (e.g., cell module assembly (CMA)). A battery module or assembly is constructed by assembling multiple battery cells into a single module or assembly, and multiple modules are secured inside a pack case to complete a battery pack. This allows maintenance in the unit of a module or assembly when servicing a battery, facilitating easier maintenance and repair.

Multiple unit battery cells that make up a module or assembly are constituted with anodes, cathodes, and electrolytes, and heat is generated during the charging and discharging of battery cells. As a result, the battery cells may need an effective heat dissipation. Further, designs for efficient heat dissipation may be adopted to prevent safety accidents from the perspective of a battery module or assembly as well as a battery pack.

Meanwhile, batteries may deteriorate due to manufacturing tolerances, excessive charging and discharging, and aging. Then, when battery deterioration continues unchecked, it may eventually cause a fire. Therefore, proactive measures need to be taken to prevent fire hazards in batteries. To this end, the battery state may be continuously measured and monitored to recognize and address issues in advance, and to ensure that damage is minimized in the event of unexpected problems.

For example, when battery deterioration persists, battery cells may rapidly heat up, causing a thermal runaway phenomenon that generates gases or flames. When thermal runaway occurs in one battery cell, it may trigger a chain reaction known as thermal propagation, where gases or flames spread to adjacent battery cells or battery modules. Therefore, when thermal runaway occurs in a specific battery cell or battery module, the discharge gases caused by thermal runaway need to be effectively discharged to the outside while preventing the spread of flames to other components, in order to ensure both battery efficiency and safety.

Meanwhile, in the case of a battery pack case equipped with a cooling device that is installed to address potential battery deterioration, an internal fire in a battery pack may lead to the failure of cooling hoses and similar components due to high temperatures. This may result in the leakage of a cooling medium or foreign substances within the battery pack case.

When the leaked cooling medium or foreign substances are conductive fluids, they may potentially cause short circuits in battery cells, terminals, and others. Therefore, for a battery pack case equipped with an internal cooling device, the present disclosure provides a technology to effectively and quickly discharge a leaked cooling medium or foreign substances to the outside for preventing short circuits in the event of leakage.

Batteries may heat up due to various reasons, such as long-term use, external physical impacts, overcharging, or over-discharging. When battery cells inside batteries heats up due to these various reasons, it may lead to damage to the entire battery or a decrease in efficiency. A cooling system for battery cells plays an important role to ensure battery efficiency and safety.

When battery cells heat up due to various causes and a fire occurs, the rising temperature may cause a thermal runaway phenomenon, where battery cells explode. Thermal runaway may trigger a chain reaction known as thermal propagation, where gases or flames discharged from battery cells rapidly spread to adjacent battery cells or battery modules, which may result in a fire in the entire battery.

Meanwhile, short circuits may occur in battery cells due to various reasons. When short circuits occur in battery cells, an abnormally high current flows momentarily through conductive battery cells, causing a temperature rise. This may lead to a rupture or ignition of battery cells and surrounding components. Therefore, a technology to prevent or suppress short circuits in battery cells may be adopted.

Furthermore, when thermal runaway occurs, not only battery cells but also a cooling device and other devices installed inside the battery pack may be damaged under a high-temperature or high-pressure environment. Such damage to the cooling device may result in the leakage of a cooling medium or foreign substances present in the cooling device. The cooling medium or foreign substances discharged from the cooling device may cause short circuits in battery cells inside a battery pack case.

Therefore, the present disclosure provides a technology that may facilitate the discharge of gases generated during thermal runaway in a specific battery cell or battery module and a cooling medium leaked from a cooling device to the outside, while filtering out flames and foreign substances generated during thermal runaway, thereby enhancing battery stability.

In the case that venting valves are installed in the front and rear directions of a battery pack to discharge gases generated during thermal runaway inside the battery pack and cooling medium leaked due to damage to the cooling device caused by thermal runaway, due to the characteristics of cooling medium, etc. that gather at the bottom of the battery pack, smooth discharge through the venting valves installed in the front and rear directions of the battery pack may not occur, resulting in additional damage inside the battery pack, such as thermal propagation and electrical short circuits.

The present disclosure provides a battery pack case 10 in which an external plate 300 is installed on one side, such as the bottom, of a battery pack BP to collect a cooling medium leaked from a cooling device damaged during thermal runaway and a venting valve 500 is formed on the external plate 300, thereby ensuring that gases generated during thermal runaway and the cooling medium leaked from the damaged cooling device may be effectively discharged to the outside, even when these gases and cooling medium accumulate at the bottom.

By effectively discharging the gases and cooling medium accumulating at the bottom of the battery pack BP through the venting valve 500 installed at the bottom, further damage within the battery pack BP, such as thermal propagation and electrical short circuits, may be prevented or suppressed. The venting valve 500 may be installed not only on the external plate 300 at the bottom of the battery pack BP but also in the front and rear directions of the battery pack BP, which may further enhance the discharge effects of the generated gases and leaked cooling medium.

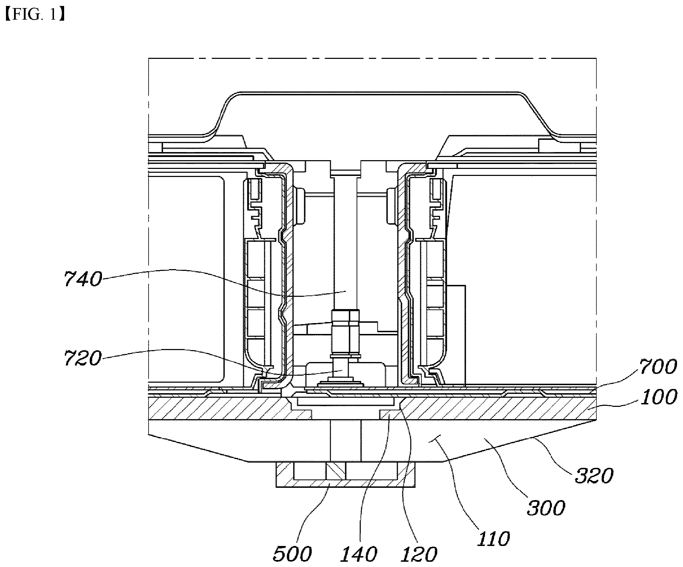

The battery pack case 10 of the present disclosure, as illustrated in FIG. 1, includes a base plate 100 of the battery pack BP that forms a lower surface of the battery pack case 10 and has a through-hole 120 formed to communicate the internal space of the battery pack case 10 with the outside, the external plate 300 that is spaced apart from the outer surface of the base plate 100 and is configured to block the through-hole 120 from being exposed to the outside and to define a separation space 110 between the base plate 100 and the external plate 300, and the venting valve 500 that is provided on the external plate 300 to selectively discharge the generated gases and leaked cooling medium collected within the separation space 110 according to the internal pressure of the separation space 110. For example, the venting valve 500 automatically switches to an open state when the internal pressure of the separation space 110 reaches a preset value, allowing the generated gases and leaked cooling medium collected in the separation space 110 to be discharged.

A plurality of battery assemblies is incorporated inside the battery pack case 10. The term "battery assembly" mentioned in the present disclosure refers to a unitary assembly of a plurality of battery cells, and for example, includes concepts such as a battery module, where battery cells are gathered in a case or housing, and a battery semi-assembly with straps or similar components. Further, the battery assembly includes the concept of a cell-to-pack (CTP) structure, where a plurality of battery cells is gathered and directly secured inside the battery pack case 10 without a battery assembly. The battery assembly, referred to as "battery module" in the present disclosure, encompasses various forms of unit assemblies that gather a plurality of battery cells for installation into the battery pack case 10.

The battery cells mounted inside the battery pack case 10 may heat up due to external impacts or heat generated during charging or discharging, and this heating necessitates effective cooling. When the cooling of battery cells is not adequately achieved, it may compromise the efficiency and safety of battery cells, which, in turn, affects overall battery performance. Therefore, the battery cells may be cooled properly.

According to one embodiment of the present disclosure, as illustrated in FIG. 1, a cooling channel 700 is installed below the battery assemblies as a battery cell cooling device. A cooling medium such as cooling water circulates inside the cooling channel 700 to cool the battery assemblies through direct heat conduction. By using this direct heat conduction type cooling channel, cooling efficiency may be increased, resulting in an enhanced battery efficiency and safety.

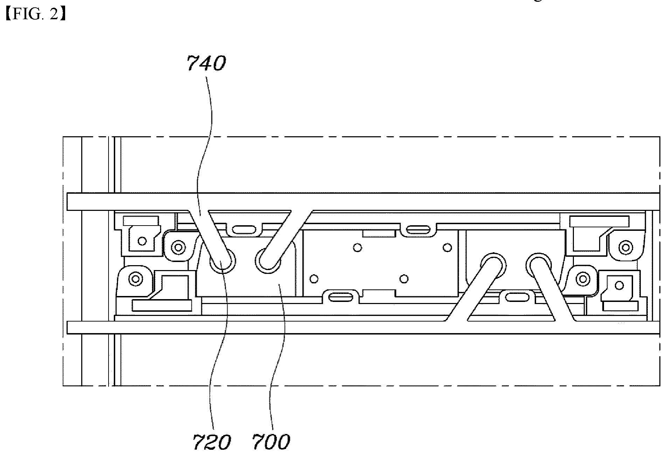

Furthermore, referring to FIGS. 1 and 2, the cooling channel 700 is equipped with a cooling hose 740 to effectively manage the inflow and outflow of the cooling medium. The cooling medium flows through the cooling hose 740 to cool the battery cell. Then, the cooling hose 740 is connected to the cooling channel 700 through a cooling port 720. The cooling port 720 serves as a device to direct the cooling medium flowing through the cooling hose 740 to the cooling channel 700, facilitating the efficient flow of the cooling medium. In the present disclosure, in addition to the cooling channel 700, cooling hose 740, and cooling port 720, various types of cooling devices may be configured to address the heating of battery cells.

In case of the cooling channel 700, cooling hose 740, and cooling port 720, when connections between them and other devices inside the battery pack BP are incomplete or the coupling relationship therebetween is weaken over time, or when a fire occurs inside the battery pack BP, the durability of these components may be compromised, causing them to melt and leading to the leakage of the cooling medium or foreign substances.

When the cooling medium or foreign substances leak from the cooling device such as the cooling channel 700, cooling hose 740, or cooling port 720 inside the battery pack case 10, it may lead to problems such as the destruction of electrical insulation between a plurality of battery cells and terminals, or the occurrence of short circuits. Therefore, when the cooling device is installed inside the battery pack case 10, the discharge of cooling substances to the outside may be facilitated during battery anomalies such as thermal runaway, while effectively filtering out foreign substances.

Meanwhile, in the event of thermal runaway in a specific battery cell or battery module mounted inside the battery pack case 10, gases or flames are generated in that battery cell or battery module. These gases or flames then propagate in a chain reaction to adjacent battery cells or battery modules, causing thermal propagation that leads to ignition inside the battery pack case 10.

Therefore, when thermal runaway occurs in a specific battery cell or battery module, gases leaked from that battery cell or battery module need to be smoothly discharged to the outside, and at the same time, flames generated in that battery cell or battery module need to be effectively filtered to prevent or suppress secondary damage both battery inside and outside.

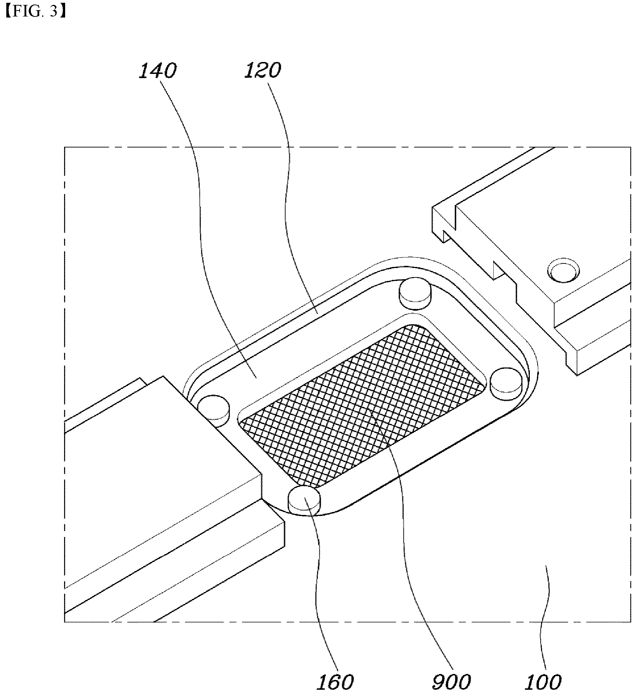

To this end, in the present disclosure, as illustrated in FIG. 3, the through-hole 120 is formed in the base plate 100, and the gases generated by thermal runaway or the cooling medium leaked from the cooling device damaged by thermal runaway passes through the through-hole 120 formed in the base plate 100. The base plate 100 in the illustrated embodiment or in the present disclosure is described as forming the bottom surface of the battery pack case, but the base plate 100 is not necessarily limited to the position of the bottom surface and may be positioned in various directions of the battery pack case where the battery assemblies are installed.

Referring back to FIG. 1, the base plate 100 forms the bottom surface of the battery pack case 10, a plurality of battery assemblies are incorporated inside the battery pack case 10, and the through-hole 120 of the base plate 100 is formed at a point between the battery assemblies inside the battery pack case 10. Then, the cooling channel 700 is provided between the battery assemblies inside the battery pack case 10 and the base plate 100 to enable direct cooling of the battery assemblies and battery cells. Since the cooling device such as the cooling channel 700, cooling hose 740, or cooling port 720 is installed in one side including the bottom of the battery assemblies, positioning the through-hole 120 of the base plate 100 at a point between the battery assemblies inside the battery pack case 10 allows the gases, generated from each battery assembly or the cooling medium leaked from the cooling device damaged due to thermal runaway, to pass through the through-hole 120.

Therefore, the through-hole 120 of the base plate 100 is formed at a position corresponding to the cooling port 720 of the cooling channel 700 or the cooling hose 740 connected to the cooling port 720 as illustrated in FIG. 1 according to one embodiment, so that the cooling medium or foreign substances leaked from the cooling port 720 or the cooling hose 740 is introduced into the through-hole 120 by gravity. By forming the through-hole 120 of the base plate 100 at a position corresponding to the cooling port 720 or cooling hose 740, the cooling medium leaked due to thermal runaway may be effectively discharged to the outside of the battery pack case 10, and foreign substances contained in the leaked cooling medium may be filtered through a filter installed in the through-hole.

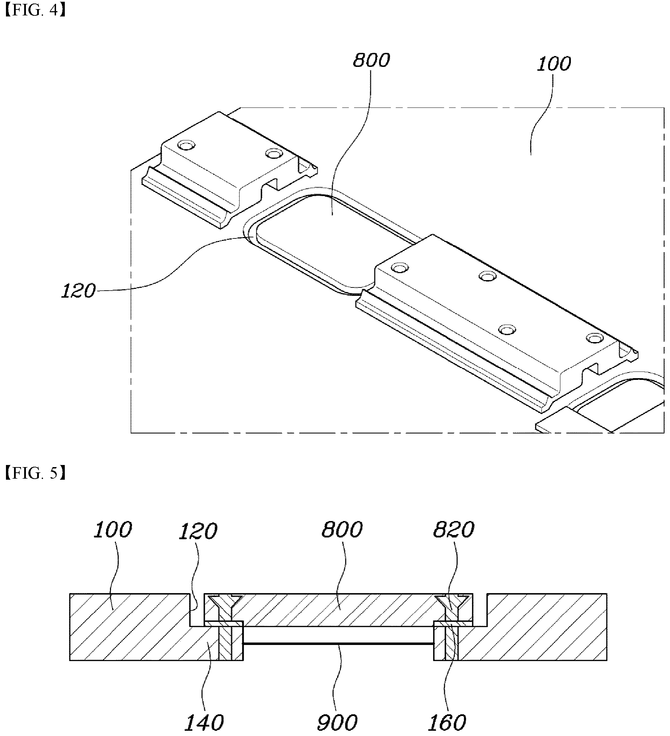

Referring to FIGS. 3 and 4, the through-hole 120 of the base plate 100 is equipped with a filter cover 800 or a filter net 900. Since the through-hole 120 of the base plate 100 discharges not only the gases generated by thermal runaway but also the cooling medium leaked from the cooling device, the filter cover 800 is provided primarily to filter out flames or foreign substances, and the filter net 900 is provided secondarily to minimize the inflow of flames or foreign substances to the external plate 300, ensuring that only the gases and cooling medium enter the through-hole 120.

Referring to FIGS. 4 and 5, the filter cover 800 is installed at a point of the through-hole 120 that faces the internal space of the battery pack case 10 to effectively close part of the through-hole 120, while the filter net 900 is installed at a point of the through-hole 120 that faces the external plate 300 to prevent or suppress foreign substances from entering the separation space 110.

As illustrated in FIGS. 4 and 5, the filter cover 800 has a plate shape and is seated inside the through-hole 120, with the outer circumference of the filter cover 800 being spaced apart from the inner circumference of the through-hole 120 to create a gap therebetween. The gap allows for communication between the internal space of the battery pack case 10 and the separation space 110, thereby enabling the gases generated by thermal runaway inside the battery pack case 10 or the cooling medium leaked from the cooling device to flow into the through-hole 120.

The filter cover 800 provided in the internal space of the battery pack case 10 is made of a fire-resistant metal to ensure durability even under abnormal conditions inside the battery pack case 10 such as thermal runaway. In one embodiment, the filter cover 800 may be made of aluminum, which is easy to shape, lightweight, and highly durable.

Meanwhile, as illustrated in FIGS. 3 and 5, the filter net 900, which is a secondary filtering device, is provided in the through-hole 120 of the base plate 100 to prevent or suppress foreign substances from entering the separation space 110. The filter net 900 is formed in the direction facing outward from the through-hole 120 and serves to secondarily prevent or suppress foreign substances that the filter cover 800, which is a primary filtering device, was unable to catch, from entering the separation space 110. The filter net 900, for example, features a mesh-shaped net structure that may effectively block and mitigate the entry of foreign substances into the separation space 110. As in the filter cover 800, it may be made of a fire-resistant material to prevent or suppress melting or damage due to, e.g., flames in abnormal conditions inside the battery pack case 10.

In addition, a flange 140 may be formed on the inner circumference of the through-hole 120 of the base plate 100 to protrude inward of the through-hole 120, as illustrated in FIGS. 3 and 5. The flange 140 may serve not only to couple the filter cover 800 to the through-hole 120 but also as an indirect barrier to prevent or suppress the entry of flames or foreign substances through the through-hole 120. Thus, the flange 140 may be integrally formed with the base plate 100 during the formation of the through-hole 120.

Referring to FIG. 3, a plurality of supports 160 is formed on the flange 140 so that the filter cover 800 is seated on the supports 160, thereby being secured in the through-hole 120. In this case, the filter cover 800 is spaced apart from the flange 140, and thus, the outer circumference of the filter cover 800 may be spaced apart from the inner circumference of the through-hole 120. This allows for the inflow of the gases or leaked cooling medium through the through-hole 120.

Furthermore, as illustrated in FIG. 5, when the filter cover 800 is secured in the through-hole 120 using the supports 160 located on the flange 140, the filter cover 800 may be coupled to the base plate 100. Since the filter cover 800 is secured in the through-hole 120 with a gap, there is a risk of the filter cover 800 being detached from the through-hole 120 under high-temperature or high-pressure conditions caused by battery abnormalities. Therefore, as illustrated in FIG. 5, a bolt 820 may be used to fasten the filter cover 800 to the base plate 100, thereby preventing or suppressing the filter cover 800 from being detached. This may prevent or suppress the entry of flames generated during thermal runaway or foreign substances leaked from the cooling device into the separation space 110 between the base plate 100 and the external plate 300. The coupling is not limited to the illustrated embodiment and a variety of fastening methods may be employed to couple the filter cover 800 to the base plate 100 as long as the filter cover 800 may be effectively coupled and secured to the base plate 100.

The filter cover 800 and filter net 900 formed in the through-hole 120 serve not only to discharge only the gases or cooling medium generated in the event of a fire such as thermal runaway inside the battery pack case 10 to the outside while preventing or suppressing foreign substances or flames from being discharged to the outside, but also to prevent or suppress the reverse inflow of foreign substances into the battery pack case 10, thereby isolating the internal atmosphere of the battery pack case 10 from the outside. This contributes to advantageous thermal management.

The external plate 300 is spaced apart from the outer surface of the base plate 100 as illustrated in FIG. 1 to block the through-hole 120 of the base plate 100 from being exposed to the outside, while discharging the gases or leaked cooling medium generated due to thermal runaway to the outside through the venting valve 500 formed on the external plate 300. To this end, the external plate 300 has a sidewall formed along the perimeter thereof and is coupled at the sidewall to the base plate 100 to define the separation space 110.

Referring to FIG. 1, the separation space 110 between the base plate 100 and the external plate 300 acts, under normal conditions, as an empty space to absorb or disperse impacts input from below, and stores fluids such as the gases or cooling medium discharged through the through-hole 120. Then, when thermal runaway occurs inside the battery pack case 10, the separation space 110 stores the gases or cooling medium leaked through the through-hole 120 to help the discharge of the gases or cooling medium to the outside through the venting valve 500 under a certain pressure.

Meanwhile, in the event of a fire caused by flames or foreign substances that the filter cover 800 and filter net 900 of the through-hole 120 are unable to catch, the external plate 300 coupled, e.g., to the bottom of the battery pack case 10 prevents or suppresses the spread of the fire to the outside using a cooling medium. For example, the external plate 300 also serves as a fire-resistant or flame-retardant wall to prevent or suppress the spread of a fire originating inside the battery pack case 10 to the outside.

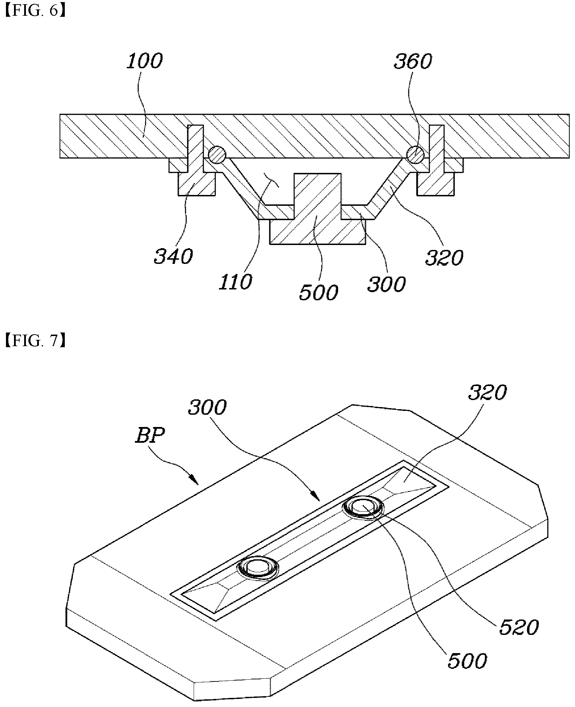

Since the external plate 300 needs to store fluids such as the gases or cooling medium having passed through the through-hole 120, a portion of the external plate 300 corresponding to the through-hole 120 of the base plate 100 may be configured to protrude outward from the battery pack case 10, as illustrated in FIG. 6. For example, as illustrated in FIG. 6, the external plate 300 may have a concave plate shape coupled to the base plate 100, thereby providing an efficient storage area for the gases or cooling medium discharged from the battery pack case 10.

The external plate 300 is provided with the venting valve 500 that operates under a certain pressure, as illustrated in FIGS. 1 and 6. The venting valve 500 is a relief-type valve that automatically opens when the pressure inside the external plate 300 exceeds a certain value to discharge the gases or cooling medium stored inside the external plate 300, thereby preventing or suppressing additional battery abnormalities, including short circuits, inside the battery pack case 10.

Accordingly, the venting valve 500 may be formed on the external plate 300 at a position corresponding to the through-hole 120 of the base plate 100, as illustrated in FIG. 1, to ensure that the gases or cooling medium discharged through the through-hole 120 may be stored around the venting valve 500 positioned to correspond to the through-hole 120 and that the gases or cooling medium may be smoothly discharged to the outside as the venting valve 500 opens when the pressure of the stored gases or cooling medium exceeds a certain value.

A portion of the external plate 300 corresponding to the through-hole 120 formed in the base plate 100 protrudes most outwardly as mentioned above, so that the venting valve 500 is formed at the outermost protruding portion of the external plate 300 as illustrated in FIGS. 1 and 6. This means that when the external plate 300 is located at the bottom of the battery pack case 10, the venting valve 500 is located on the lowest portion of the external plate 300, as illustrated in FIG. 6. Therefore, the arrangement in which the venting valve 500 is located on the lowest portion of the external plate 300 ensures that when the pressure of fluids such as the gases or cooling medium stored inside the external plate 300 exceeds a certain value, the venting valve 500 may accurately respond to the internal pressure, facilitating the discharge of the gases or cooling medium.

Referring to FIGS. 6 and 7, the external plate 300 may be formed to be inclined outward from the portion corresponding to the through-hole 120, so that the height of the separation space 110 may decrease outward from the portion corresponding to the through-hole 120. In one embodiment, similar to the portion of the external plate 300 corresponding to the through-hole 120 that protrudes most outwardly, the venting valve 500 on the external plate 300 is provided at a point where the separation distance between the base plate 100 and the external plate 300 is the maximum, as illustrated in FIG. 6. The configuration ensures that the venting valve 500 accurately responds to the pressure of the gases or cooling medium stored inside the external plate 300.

The external plate 300 with the outwardly inclined design forms an inclined surface 320 as illustrated in FIGS. 6 and 7, and therefore, naturally guides the gases or cooling medium through the through-hole 120 toward the venting valve 500 on the external plate 300. For example, since batteries used in living environments such as vehicles V are not always positioned on flat surfaces, providing the inclined surface 320 on the external plate 300 may guide the gases or leaked cooling medium discharged through the through-hole 120 to accumulate at the center point of the external plate 300 where the venting valve 500 is located, thereby preventing or suppressing delays in the discharge of the gases or cooling medium from the venting valve 500.

Considering that the base plate 100 forms one side of the battery pack case, it may be made of a metallic material. In one embodiment, it may be made of aluminum, which is easy to form, has excellent durability, and enhances coupling with surrounding panels or components.

The external plate 300 is configured to ensure appropriate rigidity because the external plate 300 is combined on the exterior of the battery pack case 10 and exposed to the outside. For example, the external plate 300 may be made of a high-strength metallic material. In one embodiment, external plate 300 may be made of stainless steel to have high rigidity while preventing or suppressing corrosion from environmental exposure.

The base plate 100 may be made of a material having lower rigidity than that of the external plate 300, and therefore, may be formed thicker than the external plate 300 to achieve balance in structural performance. By differentiating the materials and thicknesses of each plate in this manner, the overall battery weight, strength, and safety may be optimized.

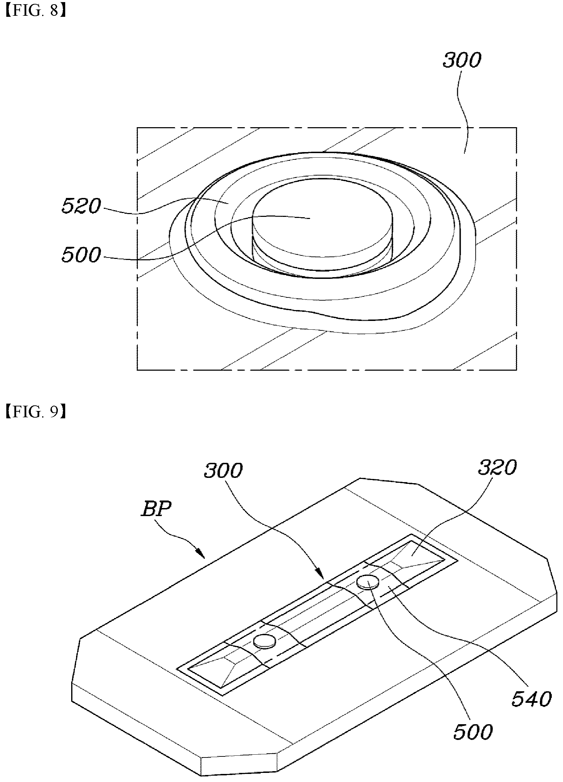

Since the venting valve 500 is formed on the external plate 300 and is also coupled to the outer surface of the external plate 300, where it is exposed, it is necessary to prevent or suppress damage to the venting valve 500. To this end, in the present disclosure, a protector 520 for the venting valve 500 is installed on the external plate 300, as illustrated in FIGS. 7 and 8. The protector 520 for the venting valve 500 may be manufactured by forming the external plate 300 such that a portion thereof around the venting valve 500 protrudes higher than the height of the venting valve 500 along the outer circumference of the venting valve 500, as illustrated in FIG. 8. The protector 520 for the venting valve 500 acts as a protective wall surrounding the venting valve 500 at a higher position than the venting valve 500, thereby absorbing external impacts and preventing or suppressing the reverse inflow of external foreign substances into the venting valve 500.

Accordingly, by integrally forming the protector 520 for the venting valve 500 with the external plate 300 while considering the point where the venting valve 500 is mounted on the external plate 300 as illustrated in FIG. 7, the durability of the external plate 300 and the protector 520 for the venting valve 500 may be increased. In another embodiment, instead of being integrally formed with the external plate 300, a separate device may be formed along the outer circumference of the venting valve 500 and be fastened to the external plate 300 to protect the venting valve 500.

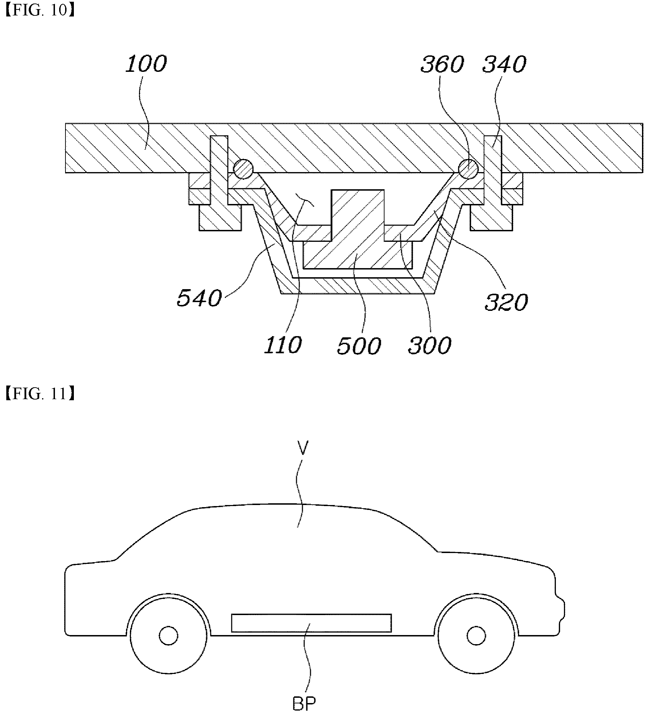

Another measure to protect the venting valve 500 coupled to the outer side of the external plate 300 is a valve cover 540. The valve cover 540 covers the outwardly exposed surface of the entire venting valve 500, and is fixedly coupled to the external plate 300, as illustrated in FIGS. 9 and 10. The valve cover 540 may be formed and coupled in the width direction of the external plate 300 as illustrated in FIG. 9, or may also be coupled in the length direction of the external plate 300 depending on the design needs.

The valve cover 540 may cover the venting valve 500 in a form where both sides thereof are open in the length direction or width direction of the external plate 300. By forming the valve cover 540 with both open sides, the gases or cooling medium discharged through the venting valve 500 may be smoothly discharged to the outside, while the venting valve 500 exposed to the outside may be effectively covered. In the meantime, various forms of valve cover 540, such as the valve cover 540 with both open sides and a fully closed valve cover, may be considered as long as they smoothly discharge the gases or leaked cooling medium discharged through the venting valve 500 to the outside.

As illustrated in FIG. 6 or FIG. 10, the external plate 300 may be provided with a sealing portion 360 along the perimeter, and may be coupled to the base plate 100 using a bolt 340 with the sealing portion 360 therebetween, thereby preventing or suppressing the external propagation of the gases or cooling medium and blocking or mitigating the reverse inflow of foreign substances from the outside.

FIG. 11 illustrates the battery pack BP, to which the battery pack case of the present disclosure is applied, is mounted in a vehicle V. The battery pack BP of the present disclosure may be applied to various industries in addition to the vehicle V, and an example thereof may be an electric energy storage system (ESS).

According to the battery pack case, and the battery pack BP and vehicle V including the same, when thermal runaway occurs in the battery pack case having a cooling device installed inside, gases generated due to the thermal runaway or a cooling medium leaked due to damage to the cooling device is effectively discharged to the outside through the venting valve 500, thereby preventing or suppressing short circuits between battery cells and thermal propagation to adjacent battery cells.

In the above description, although the present disclosure has been described by limited embodiments and drawings, the above description is merely an example of the technical idea of the present disclosure, and those skilled in the art will appreciate that various modifications and variations may be made without departing from the essential characteristics of the present disclosure.

## Claims

1. A battery pack case comprising:
a base plate forming a surface of the battery pack case and having a through-hole formed to communicate an internal space of the battery pack case with an outside;
an external plate spaced apart from an outer surface of the base plate and configured to block the through-hole from being exposed to the outside and to define a separation space between the base plate and the external plate; and
a venting valve provided on the external plate to selectively discharge a fluid from the separation space.

2. The battery pack case according to claim 1, wherein the external plate has a sidewall formed along a perimeter thereof and is coupled at the sidewall to the base plate to define the separation space, and
wherein the external plate is formed such that a portion thereof corresponding to the through-hole of the base plate protrudes outward from the battery pack case.

3. The battery pack case according to claim 1, wherein the venting valve of the external plate is formed at a position corresponding to the through-hole of the base plate, and

4. The battery pack case according to claim 1, wherein the external plate is formed to be inclined outward from a portion thereof corresponding to the through-hole, so that a height of the separation space decreases outward from the portion corresponding to the through-hole.

5. The battery pack case according to claim 1, wherein the venting valve is provided at a position where a separation distance between the base plate and the external plate is maximum.

6. The battery pack case according to claim 1, wherein the external plate is formed with a venting valve protector, and
wherein the venting valve protector is formed at a position where the venting valve is formed so as to be higher than a height of the venting valve along an outer circumference of the venting valve.

7. The battery pack case according to claim 6, wherein the venting valve protector is integrally formed with the external plate.

8. The battery pack case according to claim 1, wherein the venting valve of the external plate is covered by a valve cover, and the valve cover covers the venting valve outside the external plate, and
wherein the valve cover is coupled to the external plate in either a width direction or a length direction of the external plate.

9. The battery pack case according to claim 1, wherein the base plate forms a bottom surface of the battery pack case, the battery pack case incorporates a battery assembly inside, and the through-hole of the base plate is formed at a point between a plurality of battery assemblies incorporated in the battery pack case, and
wherein a cooling channel is provided between a battery assembly incorporated in the battery pack case and the base plate, and the through-hole of the base plate is formed at a position corresponding to a cooling port of the cooling channel or a cooling hose connected to the cooling port, so that a cooling medium leaked from the cooling port or the cooling hose is introduced into the through-hole by gravity.

10. The battery pack case according to claim 1, wherein the through-hole of the base plate is equipped with a filter cover or a filter net, preventing a foreign substance from entering the separation space, and
wherein the filter cover is installed at a point of the through-hole that faces the internal space of the battery pack case, and the filter net is formed at a point of the through-hole that faces the outside of the battery pack case.

11. The battery pack case according to claim 10, wherein a flange is formed on an inner circumference of the through-hole to protrude inward of the through-hole, and the filter cover is coupled to the flange,
wherein a plurality of supports is formed on the flange to protrude toward the filter cover, and
wherein the filter cover is seated on the supports thus causing the filter cover and the flange to be spaced apart from each other, or the filter cover is secured to the supports thus coupling the filter cover to the base plate.

12. The battery pack case according to claim 11, wherein the filter cover has a plate shape and is seated inside the through-hole, with an outer circumference of the filter cover being spaced apart from an inner circumference of the through-hole to create a gap therebetween, so that the internal space of the battery pack case communicates with the separation space through the gap.

13. The battery pack case according to claim 1, wherein the external plate is provided with a sealing portion along a perimeter, and is coupled to the base plate with the sealing portion therebetween.

14. A battery pack comprising the battery pack case according to claim 1.

15. A vehicle comprising the battery pack according to claim 14.
